# EUROPEAN PATENT APPLICATION

(11) **EP 4 650 620 A1**
(43) Date of publication of application: **19.11.2025**
(21) Application number: 25163681.7
(22) Date of filing: 14.03.2025
(51) Int. Cl.: F16F 9/36, B62K 25/08

(54) **OIL SEAL ASSEMBLY AND SHOCK ABSORBER**

(30) Priority: 16.05.2024 TW 113118182
(71) Applicant: Lee, Chung-Jia, Taichung City 436 (TW)
(72) Inventor: Lee, Chung-Jia, Taichung City 436 (TW)
(74) Representative: Lang, Christian

(57) **Abstract**

An oil seal assembly (20, 20a) is provided, including: a seat (21, 21a) body having an inner wall (22) and a through hole (23) defined by the inner wall (22), the inner wall (22) including a first annular groove (24); a first sealing member (30) disposed in the first annular groove (24) and at least partially protrusive beyond the first annular groove (24). A shock absorber (1) is further provided, including: a housing including first and second tube (12) members slidably connected to each other; a buffering mechanism; an oil seal assembly (20, 20a) disposed between the first and second tube (12) members, and including a seat (21, 21a) body and a first sealing member (30), the seat (21, 21a) body assembled to the first tube (11,11a) member, the seat (21, 21a) body having an inner wall (22) and a through hole (23), the inner wall (22) having a first annular groove (24), the first sealing member (30) being disposed in the first annular groove (24) and at least partially protrusive beyond the first annular groove (24).

## Description

### BACKGROUND OF THE INVENTION

### Field of the Invention

The present invention relates to a seal device, particularly to an oil seal assembly and shock absorber.

### Description of the Prior Art

A shock absorber is one of the essential components of a vehicle body. It is primarily used to absorb the impact force generated by continuous vertical vibrations of the vehicle body due to uneven road surfaces, thereby providing a more comfortable ride for the user. The shock absorber mainly converts the impact force into heat energy through the resistance generated when internal oil flows through various components (such as pistons and damping holes), thereby achieving buffering and vibration absorption.

However, after prolonged use, the oil in the shock absorber tends to become dirty and contaminated, and it is prone to leakage. This results in difficulties in the smooth operation of various components (such as pistons) and reduces the damping effect.

The present invention is, therefore, arisen to obviate or at least mitigate the above-mentioned disadvantages.

### SUMMARY OF THE INVENTION

The main object of the present invention is to provide an oil seal assembly and shock absorber that can prevent oil leakage.

To achieve the above and other objects, an oil seal assembly configured to be assembled to a first tube of a shock absorber is provided, including: a seat configured to be assembled to the first tube of the shock absorber, the seat including an inner wall and a through hole, the inner wall forming the through hole, the inner wall including a first annular groove; and a first sealing member disposed in the first annular groove and at least partially radially protrusive beyond the first annular groove and within the through hole.

To achieve the above and other objects, a shock absorber is provided, including: a housing including a first tube and a second tube slidably connected to each other, an interior of the first tube being in communication with an interior of the second tube to define an internal space; a buffer mechanism disposed in the first tube and located in the internal space, the buffer mechanism being movably inserted in the second tube; and an oil seal assembly disposed between the first tube and the second tube, the oil seal assembly including a seat and a first sealing member, the seat being assembled to the first tube, the seat including an inner wall and a through hole, the inner wall forming the through hole, the inner wall including a first annular groove, the first sealing member being disposed in the first annular groove and at least partially radially protrusive beyond the first annular groove and within the through hole, the first sealing member annularly abutting against a circumferential surface of the second tube, the oil seal assembly further including a second sealing member and a bearing, the first tube including an open end portion, the second tube being inserted through the first tube from the open end portion, and the second sealing member, the first sealing member and the bearing being sequentially arranged in a direction away from the open end portion.

The present invention will become more obvious from the following description when taken in connection with the accompanying drawings, which show, for purpose of illustrations only, the preferred embodiment(s) in accordance with the present invention.

### BRIEF DESCRIPTION OF THE DRAWINGS

Fig. 1 is a perspective view of an exemplary embodiment of the present invention;
Fig. 2 is an exploded view of the exemplary embodiment of the present invention;
Fig. 3 is a cross-sectional view of the exemplary embodiment of the present invention;
Fig. 4 is a partially enlarged view of Fig. 3;
Fig. 5 is an exploded perspective view of a second exemplary embodiment of the present invention; and
Fig. 6 is a partial cross-sectional view of the second exemplary embodiment of the present invention.

### DETAILED DESCRIPTION OF THE PREFERRED EMBODIMENTS

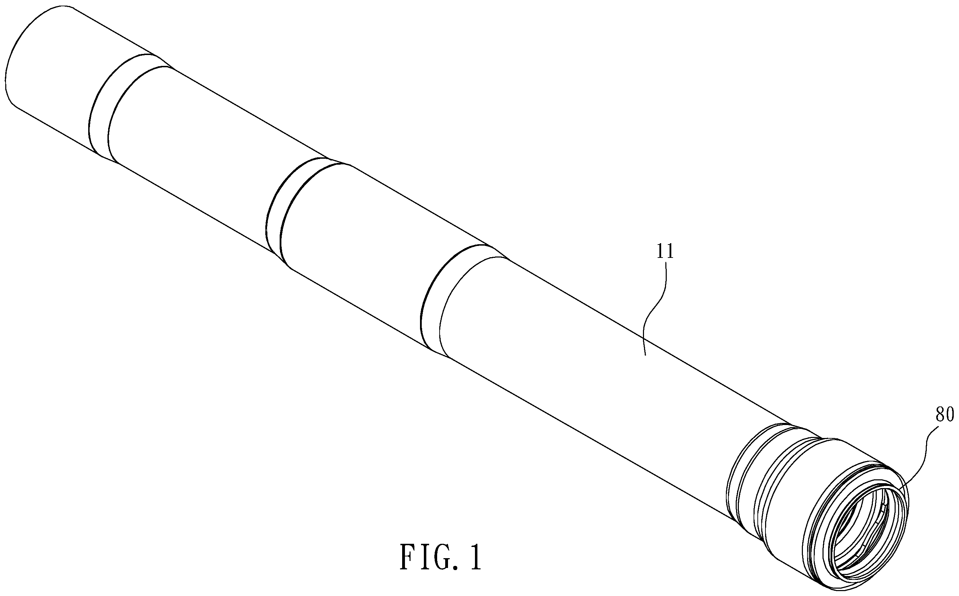

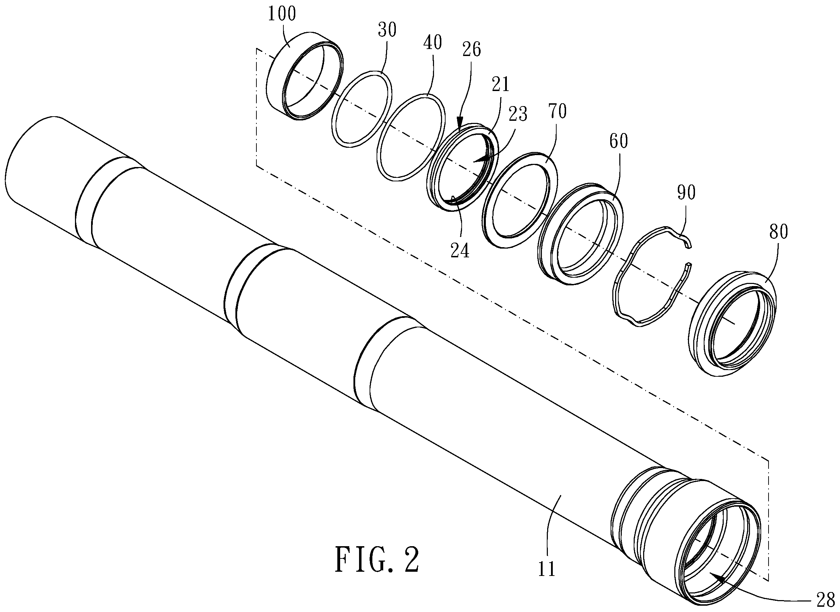

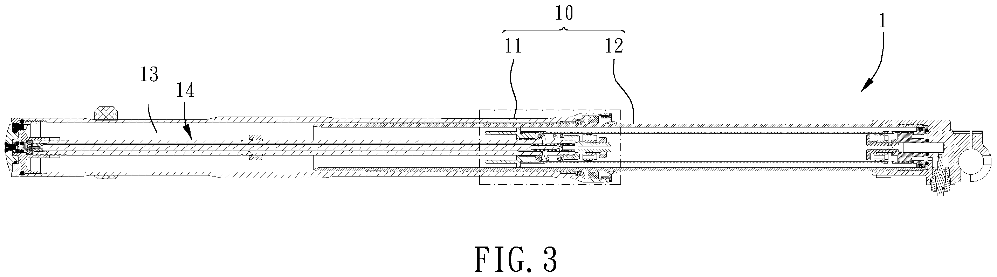

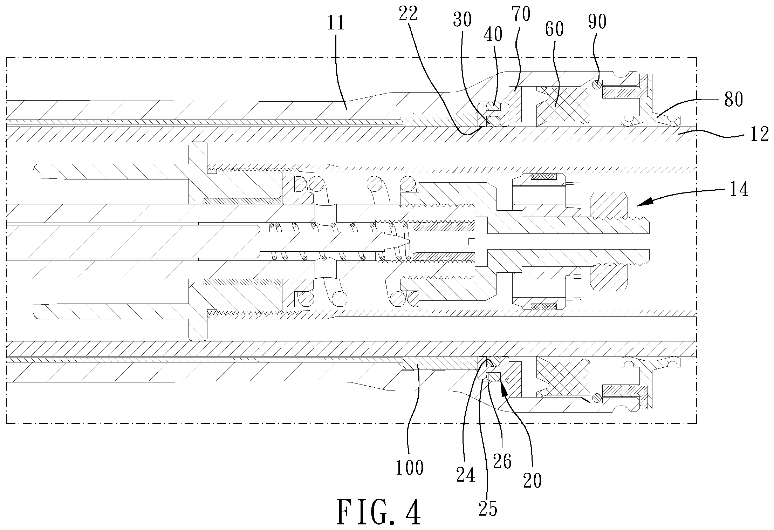

Please refer to Figs. 1 to 4 for an exemplary embodiment of the present invention. An oil seal assembly 20 of the present invention is configured to be assembled to a first tube 11 of a shock absorber 1. The oil seal assembly 20 includes a seat 21 and a first sealing member 30.

The seat 21 is configured to be assembled to the first tube 11. The seat 21 includes an inner wall 22 and a through hole 23, and the inner wall 22 defines the through hole 23. The inner wall 22 includes a first annular groove 24. The first sealing member 30 is disposed in the first annular groove 24 and is at least partially radially protrusive beyond the first annular groove 24 and within the through hole 23. In this embodiment, the first sealing member 30 is a sealing ring.

Specifically, the first sealing member 30 annularly abuts against a second tube 12 of the shock absorber 1, and the second tube 12 is inserted through the through hole 23.

By this arrangement, a superior sealing effect is achieved, effectively preventing the leakage of liquid (such as hydraulic oil) from the shock absorber 1. Additionally, the oil seal assembly 20 is detachably assembled to the first tube 11, making it easy to manufacture and assemble the first sealing member 30.

The oil seal assembly 20 further includes a second sealing member 40. The seat 21 further includes an outer wall 25 opposite to the inner wall 22. The outer wall 25 includes a second annular groove 26. The second sealing member 40 is disposed in the second annular groove 26 and radially protrusive beyond the second annular groove 26 to annularly abut against a circumferential surface of the first tube 11. Specifically, the seat 21 is annular and includes an I-shaped cross-section. The second sealing member 40 is a sealing ring. As a result, the oil inside the shock absorber 1 is less likely to leak from between the inner side of the seat 21 and the second tube 12, as well as from between the outer side of the seat 21 and the first tube 11.

The oil seal assembly 20 further includes an oil sealing member 60 which is located above the first sealing member 30. Preferably, the oil seal assembly 20 further includes a gasket 70 which is disposed between the first sealing member 30 and the oil sealing member 60. With plural sealing structures (the oil sealing member 60 and the first sealing member 30), it provides an enhanced sealing effect. Specifically, the oil within the shock absorber 1 and contaminants in the oil can first be blocked by the first sealing member 30 and then further blocked by the oil sealing member 60. In addition, by using the gasket 70 to elevate the oil sealing member 60, the oil sealing member 60 is positioned farther from the first sealing member 30, thereby reducing the likelihood of oil leakage.

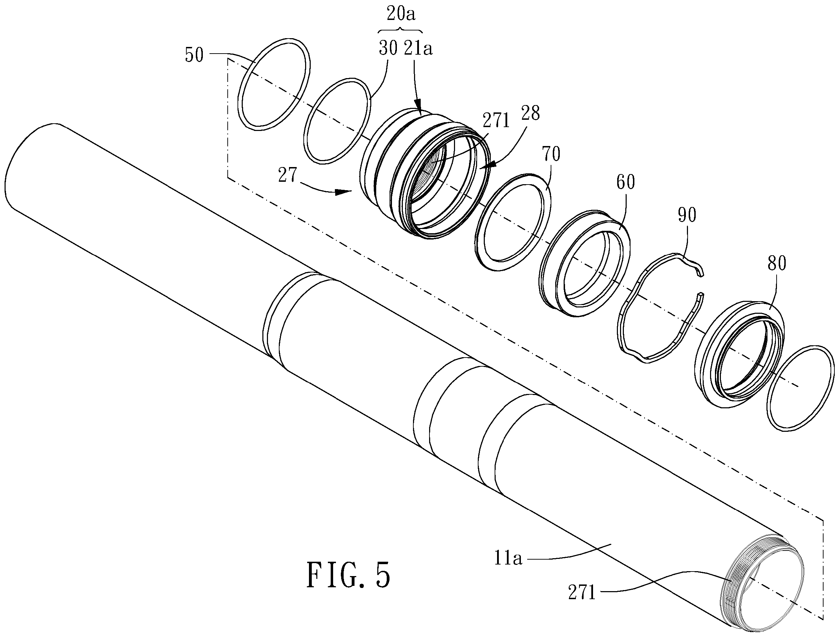

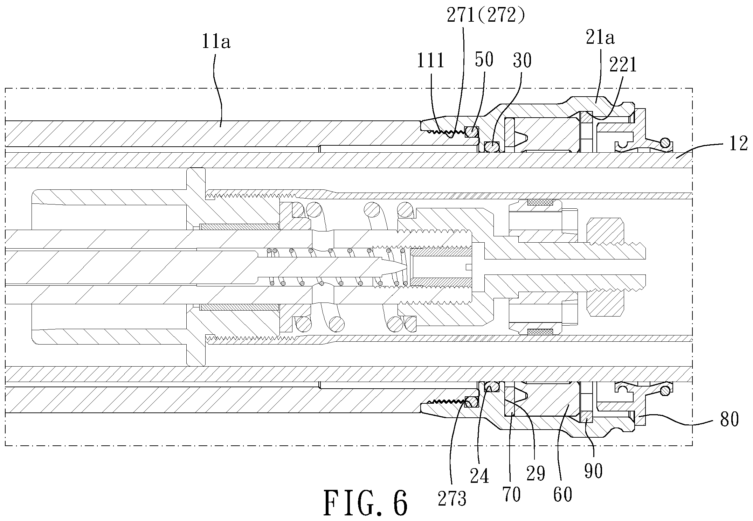

Please refer to Figs. 5 to 6, which illustrate a second exemplary embodiment of the present invention. A bottom end portion 27 of the seat 21a of the oil seal assembly 20a includes a threaded section 271, and the seat 21a is threadedly connected to the first tube 11a via the threaded section 271. Specifically, a top end portion of the first tube 11a includes a threaded portion 111 which is detachably threadedly connected to the threaded section 271.

The first annular groove 24 is located adjacent to the bottom end portion 27. Therefore, when the seat 21a is not assembled to the first tube 11a, the first sealing member 30 may be first installed into the first annular groove 24 through the opening at the bottom end portion 27 of the seat 21a, and then the threaded section 271 is threadedly connected to the threaded portion 111 of the first tube 11a. This facilitates assembly, disassembly, and manufacturing while providing excellent sealing performance. Preferably, the threaded section 271 includes a thread structure 272 and an annular groove 273 radially recessed therein, wherein the annular groove 273 is disposed adjacent to the thread structure 272. The annular groove 273 further includes an oil seal ring 50 which annularly abuts against a circumferential surface of the first tube 11a. Accordingly, the oil seal ring 50 can annularly abut and seal between the seat 21a and the first tube 11a to prevent oil leakage from the shock absorber 1.

The seat 21a further includes an open end portion 28 opposite to the threaded section 271, wherein the open end portion 28 includes a dust-proof member 80. The oil sealing member 60 is disposed between the dust-proof member 80 and the first sealing member 30. The inner wall 22 of the seat 21a further includes an engaging slot 221, wherein the engaging slot 221 receives a retainer 90. The retainer 90 is disposed between the dust-proof member 80 and the oil sealing member 60, radially protrudes beyond the engaging slot 221, and axially retains the oil sealing member 60. Additionally, an inner side of the seat 21a radially protrudes to form an annular flange 29, wherein the annular flange 29 includes the first annular groove 24, and the gasket 70 is disposed on the annular flange 29. This configuration prevents external dust and impurities from entering the first tube 11a and ensures that the oil sealing member 60 and the first sealing member 30 remain securely positioned within the first tube 11a, tightly annularly abutting against the second tube 12.

The present invention further relates to a shock absorber 1 which includes a housing 10, a buffer mechanism 14 and the oil seal assembly 20 aforementioned.

The housing 10 includes a first tube 11 and a second tube 12 slidably connected to each other, and an interior of the first tube 11 is in communication with an interior of the second tube 12 to define an internal space 13. The buffer mechanism 14 is disposed in the first tube 11 and located in the internal space 13, and the buffer mechanism 14 is movably inserted into the second tube 12. In this embodiment, the buffer mechanism 14 includes a damping unit and a pushing unit, providing a shock-absorbing effect. The oil seal assembly 20 is disposed between the first tube 11 and the second tube 12. The oil seal assembly 20 includes a seat 21 and a first sealing member 30, and the seat 21 is assembled to the first tube 11. The seat 21 includes an inner wall 22 and a through hole 23, and the inner wall 22 forms the through hole 23 and radially includes a first annular groove 24 recessed therein. The first sealing member 30 is disposed in the first annular groove 24 and at least partially radially protrudes beyond the first annular groove 24 and within the through hole 23, annularly abutting against a circumferential surface of the second tube 12. As such, when the first tube 11 and the second tube 12 extend and retract, the oil inside the shock absorber 1 may first be blocked by the first sealing member 30, making it less likely to leak externally. The oil seal assembly 20 further includes a second sealing member 40 and a bearing 100. The first tube 11 includes an open end portion 28, and the second tube 12 is inserted through the first tube 11 from the open end portion 28. The second sealing member 40, the first sealing member 30, and the bearing 100 are sequentially arranged in a direction away from the open end portion 28.

Therefore, contaminants in the oil can first be blocked by the first sealing member 30, making external leakage less likely and maintaining the damping effect.

Although particular embodiments of the invention have been described in detail for purposes of illustration, various modifications and enhancements may be made without departing from the spirit and scope of the invention. Accordingly, the invention is not to be limited except as by the appended claims.

## Claims

1. An oil seal assembly (20, 20a) configured to be assembled to a first tube (11,11a) of a shock absorber (1), including:
a seat (21, 21a) configured to be assembled to the first tube (11,11a) of the shock absorber (1), the seat (21, 21a) including an inner wall (22) and a through hole (23), the inner wall (22) forming the through hole (23), the inner wall (22) including a first annular groove (24); and
a first sealing member (30) disposed in the first annular groove (24) and at least partially radially protrusive beyond the first annular groove (24) and within the through hole (23).

2. The oil seal assembly (20, 20a) of claim 1, further including a second sealing member (40), wherein the seat (21, 21a) further includes an outer wall (25) opposite to the inner wall (22), the outer wall (25) includes a second annular groove (26), the second sealing member (40) is disposed in the second annular groove (26) and radially protrusive beyond the second annular groove (26) to annularly abut against a circumferential surface of the first tube (11,11a)

3. The oil seal assembly (20, 20a) of claim 2, wherein the seat (21, 21a) is annular and further includes an I-shaped cross-section.

4. The oil seal assembly (20, 20a) of claim 1, wherein a bottom end portion (27) of the seat (21, 21a) includes a threaded section (271), and the seat (21, 21a) is threadedly connected to the first tube (11,11a) via the threaded section (271).

5. The oil seal assembly (20, 20a) of claim 4, wherein the threaded section (271) includes a thread structure (272) and an annular groove (273), the annular groove (273) is disposed adjacent to the thread structure (272), the annular groove (273) receives an oil seal ring (50), the oil seal ring (50) annularly abuts against a circumferential surface of the first tube (11,11a).

6. The oil seal assembly (20, 20a) according to claim 1, further including an oil sealing member (60), wherein the oil sealing member (60) is located above the first sealing member (30).

7. The oil seal assembly (20, 20a) according to claim 6, further including a gasket (70), wherein the gasket (70) is disposed between the first sealing member (30) and the oil sealing member (60).

8. The oil seal assembly (20, 20a) according to claim 7, further including a second sealing member (40), wherein the seat (21, 21a) further includes an outer wall (25) opposite to the inner wall (22), the outer wall (25) includes a second annular groove (26), the second sealing member (40) is disposed in the second annular groove (26) and radially protrusive beyond the second annular groove (26) to annularly abut against a circumferential surface of the first tube (11,11a); the seat (21, 21a) is annular and further includes an I-shaped cross-section; and the first sealing member (30) is a sealing ring.

9. The oil seal assembly (20, 20a) according to claim 7, wherein a bottom end portion (27) of the seat (21, 21a) includes a threaded section (271), and the seat (21, 21a) is threadedly connected to the first tube (11,11a) via the threaded section (271); the threaded section (271) includes a thread structure (272) and an annular groove (273), the annular groove (273) is disposed adjacent to the thread structure (272), the annular groove (273) includes an oil seal ring (50), and the oil seal ring (50) annularly abuts against a circumferential surface of the first tube (11,11a); the seat (21, 21a) further includes an open end portion (28) opposite to the threaded section (271), the open end portion (28) includes a dust-proof member (80), and the oil sealing member (60) is located between the dust-proof member (80) and the first sealing member (30); the inner wall (22) of the seat (21, 21a) further includes an engaging slot (221), the engaging slot (221) further includes a retainer (90), the retainer (90) is disposed between the dust-proof member (80) and the oil sealing member (60), and the retainer (90) is radially protrusive beyond the engaging slot (221) and axially retains the oil sealing member (60); an inner side of the seat (21, 21a) radially protrudes to form an annular flange (29), the annular flange (29) includes the first annular groove (24), and the gasket (70) is disposed on the annular flange (29).

10. A shock absorber (1) including:
a housing including a first tube (11,11a) and a second tube (12) slidably connected to each other, an interior of the first tube (11,11a) being in communication with an interior of the second tube (12) to define an internal space (13);
a buffer mechanism (14) disposed in the first tube (11,11a) and located in the internal space (13), the buffer mechanism (14) being movably inserted in the second tube (12); and
an oil seal assembly (20, 20a) disposed between the first tube (11,11a) and the second tube (12), the oil seal assembly (20, 20a) including a seat (21, 21a) and a first sealing member (30), the seat (21, 21a) being assembled to the first tube (11,11a), the seat (21, 21a) including an inner wall (22) and a through hole (23), the inner wall (22) forming the through hole (23), the inner wall (22) including a first annular groove (24), the first sealing member (30) being disposed in the first annular groove (24) and at least partially radially protrusive beyond the first annular groove (24) and within the through hole (23), the first sealing member (30) annularly abutting against a circumferential surface of the second tube (12), the oil seal assembly (20, 20a) further including a second sealing member (40) and a bearing, the first tube (11,11a) including an open end portion (28), the second tube (12) being inserted through the first tube (11,11a) from the open end portion (28), and the second sealing member (40), the first sealing member (30) and the bearing being sequentially arranged in a direction away from the open end portion (28).
